Europäisches Patentamt

European Patent Office

Office européen des brevets

(19)

(11) **EP 0 815 055 B1**

(12) **EUROPEAN PATENT SPECIFICATION**

(45) Date of publication and mention
of the grant of the patent:
**07.11.2001 Bulletin 2001/45**

(51) Int Cl.7: **C01F 17/00**, C01G 37/00,
C01G 31/00, C09C 1/40,
C01B 13/18

(21) Application number: **96907422.8**

(22) Date of filing: **11.03.1996**

(86) International application number:
**PCT/EP96/01029**

(87) International publication number:
**WO 96/28384 (19.09.1996 Gazette 1996/42)**

(54) **YTTRIUM AND/OR RARE EARTHS ALUMINATES HAVING PEROVSKITE STRUCTURE, PREPARATION THEREOF AND USE AS PIGMENTS**

YTTRIUM UND/ODER SELDENE ERDE ALUMINATE MIT PEROVSKITE STRUKTUR, HERSTELLUNG DAVON UND VERWENDUNG ALS PIGMENTE

ALUMINATES D'YTTRIUM OU DE TERRES RARES, A STRUCTURE PEROVSKITE, PREPARATION DESDITS ALUMINATES ET LEUR UTILISATION EN TANT QUE PIGMENTS

(84) Designated Contracting States:
**AT BE CH DE DK ES FI FR GB GR IE IT LI LU NL PT SE**
Designated Extension States:
**SI**

(30) Priority: **13.03.1995 IT FI950045**

(43) Date of publication of application:
**07.01.1998 Bulletin 1998/02**

(73) Proprietor: **Colorobbia Italia S.p.a.**
**50053 Sovigliana Vinci (Firenze) (IT)**

(72) Inventors:
• **BALDI, Giovanni**
**I-50025 Montespertoli (IT)**
• **BITOSSI, Marco**
**I-50050 Montelupo Fiorentino (IT)**

• **DEL CONTE, Vittoriano**
**I-50050 Montelupo Fiorentino (IT)**

(74) Representative: **Gervasi, Gemma, Dr.**
**NOTARBARTOLO & GERVASI Srl,**
**Corso di Porta Vittoria, 9**
**20122 Milano (IT)**

(56) References cited:
**WO-A-93/17959          FR-A- 2 553 749**
**LU-A- 44 083**

• **CHEMICAL ABSTRACTS, vol. 116, no. 26, 29 June 1992 Columbus, Ohio, US; abstract no. 261097, DING: "rosy pigment containing rare earth oxide for ceramics and its manufacture" XP002008193 & CN,A,1 057 278 (JIANGXI UNIVERSITY) 25 December 1991**

**Description**

Field of the Invention

This invention relates to yttrium and/or rare earths aluminates having O-perovskite structure, useful as pigments, in ceramic applications, having particular brilliance, even after baking, particularly in tones from red to yellow.

Prior Art

It is known that pigments are used for coloration of a wide range of products, from varnishes to glasses, from plastics to ceramic products. For products which undergo processes of preparation including heat-treatment, often at elevated temperature, (as, for example, in the case ceramic products), there is the problem of providing pigments which maintain their tone and brilliance, even after such processes which, on the contrary, often tend to alter qualities and therefore the final appearance of the pigment itself.

In particular, pigments for colorations from yellow to red seem to be very sensible to the effects of temperature and, after baking, they show undesired color changes, as, for example, colors based on cadmium sulfoselenides. Multiple solutions have been studied in order to find pigments able to overcome said drawbacks. The pigments studied by the applicant tend to limit the use of toxic components and are comprised in the group of O-perovskite structure pigments.

Pigments having known O-perovskite structure (with respect to this, see the following Patents: EP - 545 775; EP - 545757; FR - 2 667 586 and FR - 2553 749) are not comprised in the range of colorations that we have reported.

In LU - 44 083 oriented mono-crystals prepared by Vernuil method or by precipitation from corresponding satured solutions, such mono-crystals present Crome as main component and are used as optical elements as for example laser application.

WO - 93 17 959 describes transparent cationically homogeneous refractory oxides of nanometer scale particle size having electrostatic and magnetic properties which make them suitable for many different uses.

Detailed Description of the Invention

This invention permits to solve said problems by means of yttrium and/or rare earths aluminates of O-perovskite type which gave unexpected results of unaltered tone and color intensity, even after heat treating, particularly in the tone from red to yellow.

Pigments according to the present invention have O-perovskite structure and contain Aluminium, Yttrium and/or rare earths and doping metals, as Chromium, Vanadium, Nichel, Tungsten, Iron, Copper.

Pigments according to the present invention can be chemically expressed by the Formula:

$$Al_{(2-x-y)} \cdot (Y,Ln)_x O_3 : yM$$

wherein

$M = Cr_2O_3, V_2O_5, NiO, WO_3, CuO, FeO, Fe_2O_3$;
$Ln = Er, La, Yb, Sm, Gd$ or mixtures thereof;
$0.48 \leq x \leq 1.51$;
$0.007 \leq y \leq 0.2$.

Analogously, the chemical composition of pigments according to the present invention can be represented as follows, by expressing the different metals as the corresponding oxides:

$Y_2O_3 = 0 - 87\%$
$Al_2O_3 = 10 - 44\%$
$Ln_2O_3 = 0 - 86\%$ [wherein $Ln = Er, La, Yb, Sm, Gd$ or mixtures thereof]
$Z_sO = 0 - 10\%$ [wherein Z is an alkali metal or an alkaline-earth metal and s is 1 or 2, respectively]
$F = 0 - 5\%$
$Q = 0 - 5\%$ [wherein $Q = Cr, V, Ni, Fe, Cu, W$]

The possible presence of F and $Z_sO$ in the final product is due to the possible use of catalysts which are generally utilized in the processes of preparation of the pigments (as indicated hereinafter).

Pigments according to the present invention are prepared according to known procedures. The metal compounds are mixed in order to yield a homogeneous mixture which is then sintered in furnace, at a temperature comprised between 1200° and 1600° C over a period of time from about 10 to 20 hours.

As metal compounds to be used as starting products the following can be considered: all salts able to provide the cation of interest, for example hydroxides, oxides, carbonates. sulfates or nitrates of the correspondent metals, oxides and hydroxides are generally preferred.

As doping metals, those which are known in ceramic applications can be used, among which, those which gave the best results are: Chromium, Vanadium, Nickel, Tungsten, Copper and Iron.

The possible use of catalysts, as indicated above, permits to perform the sintering reaction at the lowest temperatures of the said range. As catalysts, halides. fluosilicates, carbonates or double carbonates of alkali metals or alkaline-earth metals can be used; metal fluorides are preferred and more particularly, sodium fluoride is preferred.

Products according to the present invention can be obtained according to the normal processes of sintering. The quantities of the starting products used for the preparation of the mixture to be sintered, are preferably equal to the stoichiometric quantities in order to avoid the presence of unreacted products in the final compound.

According to the starting raw materials, the sintering can proceed in oxidizing atmosphere or reducing atmosphere.

After sintering, the products can be subjected to grinding and, if necessary, they are finally dried and chemically modified so that the final granulometry is the preferred one according to their next use. Pigments according to the present invention can be used in varnish applications, plastic applications and particularly as ceramic pigments. Compounds according to the invention, in which yttrium is present and in which the doping metals are Chromium or Vanadium, are particularly preferred for their intense coloration from red to yellow, respectively, and for the particular stability and brilliance after treating at elevated temperatures.

This invention will be more and better clarified by the following examples herein reported for illustrative and not limiting purpose.

Example 1

A mixer is charged with Aluminium hydroxide (36.8 g), Yttrium oxide (55.5 g), Sodium fluoride (2.5 g), Calcium carbonate (1.0 g), Dolomite (3 g), Chromium oxide (1.2 g) and mixing is carried out to yield a homogeneous mixture.

The mixture is baked in furnace at a temperature of 1300°-1400° C up to the complete color generation (generally 15 hours, approximately).

85 g of red pigment of the following Formula:

$$Al_{0.964}Y_{1.004}O_3: 0.032Cr_2O_3$$

are obtained.

Example 2

According to Example 1, the following compounds are mixed:

| | |
|---|---|
| Aluminium hydroxide | g 32 |
| Yttrium oxide | g 30 |
| Erbium | g 30 |
| Sodium fluoride | g 3 |
| Calcium carbonate | g 1.5 |
| Dolomite | g 2 |
| Chromium oxide | g 1.5 |

87 g of a red pigment of the following Formula:

$$Al_{0.962}Y_{0.623}Er_{0.367}O_3: = 0.046Cr_2O_3$$

are obtained.

Example 3

According to Example 1, the following compounds are mixed:

| | |
|---|---|
| Aluminium hydroxide | g 29 |
| Erbium | g 63 |
| Sodium fluoride | g 3 |
| Calcium carbonate | g 1.5 |
| Dolomite | g 2 |
| Chromium oxide | g 1.5 |

88 g of a red pigment of the following Formula:

$$Al_{1.031}Er_{0.914}O_3 : 0.055Cr_2O_3$$

are obtained.

Example 4

According to Example 1, the following compounds are mixed:

| | |
|---|---|
| Aluminium hydroxide | g 32 |
| Yttrium oxide | g 55 |
| Sodium fluoride | g 2 |
| Calcium carbonate | g 3 |
| Ammonium metavanadate | g 3 |
| Dolomite | g 5 |

84 g of a yellow pigment of the following Formula:

$$Al_{0.895}Y_{1.062}O_3 : 0.04V_2O_5$$

are obtained.

**Claims**

1.  Yttrium and rare-earth aluminates having O-perovskite structure of chemical Formula:

$$Al_{(2-x-y)} \cdot (Y,Ln)_xO_3 : yM$$

wherein:

$M = Cr_2O_3, V_2O_5, NiO, WO_3, CuO, FeO, Fe_2O_3$
$Ln = Er, La, Yb, Sm, Gd$ and blends thereof.
$0.48 \leq x \leq 1.51$
$0.007 \leq y \leq 0.2$

2.  Aluminates according to Claim 1 having the following composition (wherein the different metals are expressed as oxides):

$Y_2O_3 = 0 - 87\%$
$Al_2O_3 = 10 - 44\%$

$Ln_2O_3$ = 0 - 86% [wherein Ln = Er, La, Yb, Sm, Gd or blend therof]

$Z_sO$ = 0 - 10% [wherein Z is an alkali metal or an alkaline-earth metal and s is 1 or 2, respectively]

F=0-5%

Q = 0 - 5% [wherein Q = Cr, V, Ni, Fe, Cu, W].

3. Aluminates according to claim 1 of Formula:

$$Al_{(2-x-y)} \cdot Y_xO_3 : yM$$

wherein x and y are as defined in claim 1.

4. Aluminates according to claim 3 of Formula:

$$Al_{(2-x-y)} \cdot Y_xO_3 : yCr_2O_3$$

wherein x and y are as defined in claim 1.

5. Aluminates according to claim 3 of Formula:

$$Al_{(2-x-y)} \cdot Y_xO_3 : yV_2O_5$$

wherein x and y are as defined in claim 1.

6. Aluminates according to claim 1 of Formula:

$$Al_{(2-x-y)} \cdot Y_xO_3 : yCuO; \ Al_{(2-x-y)} \cdot Y_xO_3 : yNiO;$$

$$Al_{(2-x-y)} \cdot Y_xO_3 : yWO_3; \ Al_{(2-x-y)} \cdot Y_xO_3: yFeO;$$

$$Al_{(2-x-y)} \cdot Y_xO_3 : yFe_2O_3;$$

wherein x, y are as defined as in claim 1.

7. Aluminates according claim 1 of Formula:

$$Al_{0.964}Y_{1.004}O_3: 0.032 \ Cr_2O_3; \ Al_{0.962}Y_{0.623}Er_{0.367}O_3:$$

$$0.046 \ Cr_2O_3; \ Al_{0.895}Y_{1.062}O_3: 0.04 \ V_2O_5$$

8. Process for preparation of compounds according to claim 1 wherein metal compounds, possibly in the presence of catalysts, are mixed in order to achieve a homogeneous mixture which is then sintered at a temperature between 1200° and 1600° C over a time from 10 to 20 hours.

9. Process according to claim 8 wherein said metal compounds used as starting products are fluorides, hydroxides, oxides, carbonates, sulfates and nitrates of the correspondent metals.

10. Process according to claim 9 wherein fluorides of alkali metals or alkaline-earth metals, fluosilicates, carbonates or double carbonates of alkali or alkaline-earth metals are used as catalysts.

11. Process according to claim 10 wherein the catalyst is sodium fluoride.

**12.** Use of the compounds according to claims 1 and 2, as pigments.

**13.** Use according to claim 12 in the industry of varnishes, plastics and ceramic.

**14.** Use according to claim 13 of the red pigment:

$$Al_{(2-x-y)} \cdot Y_xO_3: yCr_2O_3,$$

wherein x, y are defined as in claim 1.

**15.** Use according to claim 13 of the yellow pigment:

$$Al_{(2-x-y)} \cdot Y_xO_3 : yV_2O_5,$$

wherein x, y are defined as in claim 1.

**Patentansprüche**

**1.** Yttrium- und Seltenerdaluminate mit O-Perovskit-Struktur mit der chemischen Formel:

$$Al_{(2-x-y)} \cdot (Y,Ln)_xO_3:yM$$

in der

M = $Cr_2O_3$, $V_2O_5$, NiO, $WO_3$, CuO, FeO, $Fe_2O_3$

Ln = Er, La, Yb, Sm, Gd und Gemische derselben

$0,48 \leq x \leq 1,51$

$0,007 \leq y \leq 0,2$.

**2.** Aluminate nach Anspruch 1 mit der folgenden Zusammensetzung (wobei die verschiedene Metalle als Oxide ausgedrückt sind)

$Y_2O_3$ = 0 - 87%
$Al_2O_3$ = 10 - 44%
$Ln_2O_3$ = 0 - 86% [wobei Ln = Er, La, Yb, Sm, Gd oder ein Gemisch derselben]
$Z_sO$ = 0-10% [wobei Z ein Alkalimetall oder ein Erdalkalimetall ist und s 1 bzw. 2 ist]
F = 0 - 5%
Q = 0 - 5% [wobei Q = Cr, V, Ni, Fe, Cu, W].

**3.** Aluminate nach Anspruch 1 mit der Formel:

$$Al_{(2-x-y)} \cdot Y_xO_3:yM$$

in der x und y sind, wie in Anspruch 1 definiert.

**4.** Aluminate nach Anspruch 3 mit der Formel:

$$Al_{(2-x-y)} \cdot Y_xO_3:yCr_2O_3$$

in der x und y sind, wie in Anspruch 1 definiert.

**5.** Aluminate nach Anspruch 3 mit der Formel:

$$Al_{(2-x-y)} \cdot Y_x O_3 : y V_2 O_5$$

in der x und y sind, wie in Anspruch 1 definiert.

**6.** Aluminate nach Anspruch 1 mit der Formel:

$$Al_{(2-x-y)} \cdot Y_x O_3 : y CuO; \quad Al_{(2-x-y)} \cdot Y_x O_3 : y NiO;$$

$$Al_{(2-x-y)} \cdot Y_x O_3 : y WO_3; \quad Al_{(2-x-y)} \cdot Y_x O_3 : y FeO;$$

$$Al_{(2-x-y)} \cdot Y_x O_3 : y Fe_2 O_3;$$

in der x und y sind, wie in Anspruch 1 definiert.

**7.** Aluminate nach Anspruch 1 mit der Formel:

$$Al_{0,964} Y_{1,004} O_3 : 0,032\ Cr_2 O_3; \quad Al_{0,962} Y_{0,623} Er_{0,367} O_3 : 0,046\ Cr_2 O_3;$$

$$Al_{0,895} Y_{1,062} O_3 : 0,04\ V_2 O_5.$$

**8.** Verfahren zur Herstellung von Verbindungen nach Anspruch 1, **dadurch gekennzeichnet, daß** Metallverbindungen, möglicherweise in Gegenwart von Katalysatoren, vermischt werden, um eine homogene Mischung zu erhalten, die anschließend bei einer Temperatur zwischen 1.200°C und 1.600°C über einen Zeitraum von 10 bis 20 Stunden gesintert wird.

**9.** Verfahren nach Anspruch 8, **dadurch gekennzeichnet, daß** besagte Metallverbindungen, die als Ausgangsprodukte verwendet werden, Fluoride, Hydroxide, Oxide, Carbonate, Sulfate und Nitrate der entsprechenden Metalle sind.

**10.** Verfahren nach Anspruch 9, **dadurch gekennzeichnet, daß** Fluoride von Alkalimetallen oder Erdalkalimetallen, Fluosilikate, Carbonate oder Doppelcarbonate von Alkali- oder Erdalkalimetallen als Katalysatoren verwendet werden.

**11.** Verfahren nach Anspruch 10, **dadurch gekennzeichnet, daß** der Katalysator Natriumfluorid ist.

**12.** Verwendung der Verbindungen nach den Ansprüchen 1 und 2 als Pigmente.

**13.** Verwendung nach Anspruch 12 in der Lack-, Kunststoff- und Keramikindustrie.

**14.** Verwendung nach Anspruch 13 des roten Pigmentes:

$$Al_{(2-x-y)} \cdot Y_x O_3 : y Cr_2 O_3.$$

wobei x und y sind, wie in Anspruch 1 definiert.

**15.** Verwendung nach Anspruch 13 des gelben Pigments:

$$Al_{(2-x-y)} \cdot Y_xO_3:yV_2O_5,$$

wobei x und y sind, wie in Anspruch 1 definiert.

## Revendications

1. Yttrium et aluminates de terres rares ayant une structure O-perovskite avec la Formule chimique :

$$Al_{(2-x-y)} \cdot (Y, Ln)_xO_3 : yM$$

où :

$M=Cr_2O_3, V_2O_5, NiO, WO_3, CuO, FeO, Fe_2O_3$
$Ln=Er, La, Yb, Sm, Gd$ et des mélanges de ceux-ci.
$0,48 \leq x \leq 1,51$
$0,007 \leq y \leq 0,2$

2. Aluminates selon la revendication 1 ayant la composition suivante (où les différents métaux sont exprimés comme oxydes) :

$Y_2O_3 = 0-87 \%$
$Al_2O_3 = 10-44 \%$
$Ln_2O_3 = 0-86 \%$ [où Ln=Er, La, Yb, Sm, Gd ou des mélanges de ceux-ci]
$Z_5O = 0-10 \%$ [où Z est un métal alcalin ou un métal de terre alcaline et s est 1 ou 2, respectivement]
$F = 0-5 \%$
$Q = 0-5 \%$ [où Q=Cr, V, Ni, Fe, Cu, W].

3. Aluminates selon la revendication 1 avec la Formule :

$$Al_{(2-x-y)} \cdot Y_xO_3 : yM$$

où x et y sont comme définis dans la revendication 1.

4. Aluminates selon la revendication 3 avec la Formule :

$$Al_{(2-x-y)} \cdot Y_xO_3 : yCr_2O_3$$

où x et y sont comme définis dans la revendication 1.

5. Aluminates selon la revendication 3 avec la Formule :

$$Al_{(2-x-y)} \cdot Y_xO_3 : yV_2O_5$$

où x et y sont comme définis dans la revendication 1.

6. Aluminates selon la revendication 1 avec la Formule :

$$Al_{(2-x-y)} \cdot Y_xO_3 : yCuO \; ; Al_{(2-x-y)} \cdot Y_xO_3 : yNiO \; ;$$

$$Al_{(2-x-y)} \cdot Y_xO_3 : yWO_3 \; ; Al_{(2-x-y)} \cdot Y_xO_3 : yFeO;$$

$$Al_{(2-x-y)} \cdot Y_x O_3 : yFe_2O_3;$$

où x et y sont comme définis dans la revendication 1.

**7.** Aluminates selon la revendication 1 avec la Formule :

$$Al_{0,964}Y_{1,004}O_3:0,032Cr_2O_3 ;$$

$$Al_{0,962}Y_{0,623}Er_{0,367}O_3:0,046Cr_2O_3 ;$$

$$Al_{0,895}Y_{1,062}O_3:0,04V_2O_5$$

**8.** Procédé de préparation de composés selon la revendication 1, où des composés de métal, si possible en présence de catalyseurs, sont mélangés pour obtenir un mélange homogène qui est ensuite sintérisé à une température comprise entre 1200° et 1600°C pendant une période de temps allant de 10 à 20 heures.

**9.** Procédé selon la revendication 8, où lesdits composés de métal utilisés comme des produits de départ sont des fluorures, hydroxydes, oxydes, carbonates, sulfates et nitrates des métaux correspondants.

**10.** Procédé selon la revendication 9, où des fluorures de métaux alcalins ou de métaux de terres alcalines, des fluosilicates, des carbonates ou carbonates doubles d'alcali ou de métaux de terres alcalines sont utilisés comme catalyseurs.

**11.** Procédé selon la revendication 10, où le catalyseur est du fluorure de sodium.

**12.** Utilisation des composés selon les revendications 1 et 2, comme pigments.

**13.** Utilisation selon la revendication 12 dans l'industrie du vernis, du plastique et de la céramique.

**14.** Utilisation selon la revendication 13 du pigment rouge :

$$Al_{(2-x-y)} \cdot Y_x O_3 : yCr_2O_3,$$

où x et y sont définis comme dans la revendication 1.

**15.** Utilisation selon la revendication 13 du pigment jaune :

$$Al_{(2-x-y)} \cdot Y_x O_3 : yV_2O_5,$$

où x et y sont définis comme dans la revendication 1.